# EUROPEAN PATENT APPLICATION

(11) **EP 2 650 190 A1**
(43) Date of publication of application: **16.10.2013**
(21) Application number: 12163972.8
(22) Date of filing: 12.04.2012
(51) Int. Cl.: B61K 9/04, G01K 1/14

(54) **Device for detecting a hot box or hot wheel condition**

(71) Applicant: Progress Rail Services Corporation, Albertville, AL 35950 (US)
(72) Inventor: Agostini, Alessandro, 50134 Firenze (IT)
(74) Representative: Modiano, Micaela Nadia

(57) **Abstract**

A device (10) for a detecting a hot box condition on a rail vehicle comprising a housing (12) removably coupled to an undercarriage component of the rail vehicle, the housing being coupled magnetically; and a temperature sensor positioned within the housing.

## Description

### Technical Field

This disclosure generally relates to the field of rail transportation, and more particularly, to determining a temperature of rail vehicle undercarriage components.

### Background

Safe and reliable operation of a railroad system may be dependent upon the integrity of the rolling mechanisms of the vehicles travelling over the rails, such as trains. Worn or damaged train wheel bearings may increase the rolling friction of the axle thereby increasing the power required to pull the train. In addition, worn or damaged bearings may cause excessive wear to the train axle and, in the case of failure of the bearing, may even cause the axle to lock up, preventing rotation of the wheel and thus resulting in a potential fire hazard due to the heat build up and potential sparking caused by friction of the locked wheel scraping along the rail.

Bearing temperatures may be scanned by sensing a temperature of the wheel bearing indirectly. When the bearing temperatures are high due to overheating of the wheel a hot wheel condition may exist. For example, infrared radiation (IR) sensors may be mounted along a rail to detect IR energy emitted by a wheel of passing rail cars. The IR energy may be indicative of a temperature of the wheel.

Wheel temperatures may be scanned by sensing a temperature of the wheel directly. When the bearing temperatures are high due to overheating of the wheel a hot wheel condition may exist. For example, infrared radiation (IR) sensors may be mounted along a rail to detect IR energy emitted by an outer wheel bearing of passing rail cars. The IR energy may be indicative of a temperature of the wheel bearing.

However, such a system may be limited to bearing or wheel temperatures being scanned only at specific points on the railway paths. For rail car transporting potentially dangerous or dangerous cargo there may be a need for the bearing or wheel temperatures to be scanned continuously so that any changes in temperature may be detected within a short time.

US6535135 discloses an anti-friction roller bearing containing a sensing device that may radiate signals which reflect conditions within the bearing. The sensing device may detect operating temperature in the bearing though a sensor. The bearing may have rollers arranged in two rows within an outer race and around an inner race. The bearing may contain a sensing device that may transmit signals, which reflect conditions within the bearing, wirelessly to a remote receiver. The sensing device may be self-powered through electromagnetic induction by rotation of a portion of the bearing or through vibratory motion of the bearing as it acts upon a piezoelectric crystal.

The disclosed sensing device is complicated and difficult to manufacture.

US2011/0231039 discloses a device positioned on an axle shaft of a rail vehicle. The device may be coupled to the shaft by a band wound around the shaft so that it may rotate with the rotation with the rotation movement of the shaft. The device may include a temperature sensor. The temperature sensor may be used for determining overheating of the axle bearings of the rail vehicle. In particular, the temperature may be determined by means of an infrared sensor. The infrared sensor may be arranged, within the device with line of sight to the wheel inner side, to detect hot boxes, since the bearing is exactly on the other side of the wheel.

The present disclosure is directed, at least in part, to improving or overcoming one or more aspects of the prior art system.

### Brief Summary of the Invention

In a first aspect, the present disclosure describes a device for a detecting a hot box condition on a rail vehicle comprising a housing removably coupled to an undercarriage component of the rail vehicle, the housing being coupled magnetically; and a temperature sensor positioned within the housing.

In a second aspect, the present disclosure describes a method of temporary retrofitting of a rail vehicle for detecting a hot box condition comprising the step of removably coupling a housing of a device to an undercarriage component of the rail vehicle wherein the housing is coupled magnetically and a temperature sensor is positioned within the housing.

### Brief Description of the Drawings

The foregoing and other features and advantages of the present disclosure will be more fully understood from the following description of various embodiments, when read together with the accompanying drawings, in which:

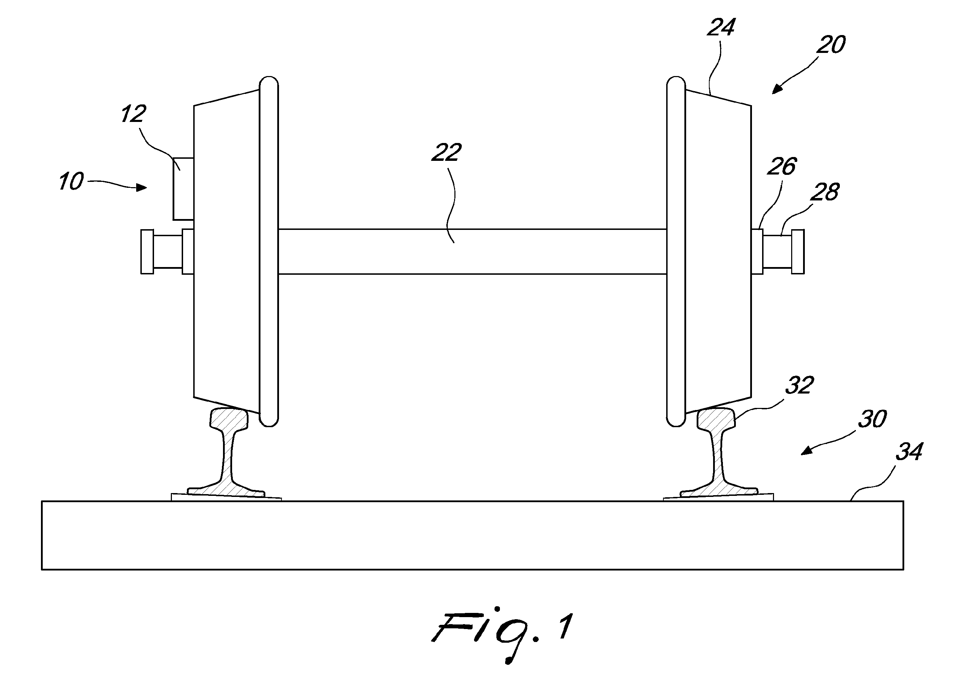

Fig. 1 is a schematic representation of a device of a hot box condition on a rail vehicle undercarriage component according to the present disclosure.

### Detailed Description

This disclosure generally relates to a device **10** for detecting a hot box/ hot wheel condition on a rail vehicle undercarriage component.

With reference to Fig. 1, the device **10** may comprise a housing **12.** The housing **12** may have a container-like structure. The housing **12** may have a structure to accommodate the temperature sensor and any required electronics. The housing **12** may be configured so as to be positioned on an undercarriage component of a rail vehicle. The housing **12** may have a suitable shape and structure to be positioned on the undercarriage component. The housing **12** may be composed of thermal insulation materials.

The housing **12** may be coupled to directly on the undercarriage component. The housing **12** may be suitably coupled to the undercarriage component. In an embodiment, the housing **12** may be removably coupled to the undercarriage component. The housing **12** may be magnetically coupled to the undercarriage component. The housing **12** may be in magnetic contact with the undercarriage component. The magnetic coupling may be sufficiently strong to hold the device **10** as a sole means of direct fastening.

The housing **12** may be provided with a magnet for magnetic coupling to the undercarriage component. The magnet may be disposed within the housing **12.** In an embodiment, the housing **12** may be provided with a plurality of magnets for magnetic coupling to the undercarriage component. The plurality of magnets may be disposed within the housing **12** and suitably arranged therein. The magnet or the plurality of magnets may be permanent magnets.

In an embodiment, a portion of the housing **12** may be magnetised for magnetic coupling to the undercarriage component. The portion of the housing **12** in contact with undercarriage component may be magnetised. The portion of the housing **12** may be constituted by a permanent magnet. The portion of the housing **12** may incorporate a permanent magnet. The permanent magnet may be incorporated into a wall of the housing **12.**

In an embodiment, the housing **12** may be magnetised for magnetic coupling to the undercarriage component. The housing **12** may be constituted by a permanent magnet. The housing **12** may incorporate a permanent magnet. The permanent magnet may be incorporated into a wall of the housing **12.**

The device **10** may further comprise a temperature sensor. The temperature sensor may be positioned within the housing. The temperature sensor may detect heat from the target undercarriage component. The temperature sensor may determine the temperature of the target undercarriage component. The temperature sensor may detect a hot box condition or a hot wheel condition through the evaluation of the IR signals emitted from the target undercarriage component.

In an embodiment, the temperature sensor may be an IR sensor for determining the temperature of the target undercarriage component. The infrared sensor may analyze the infrared emissions from the target undecarriage component to determine the temperature thereof. The infrared sensor may be pulsed and/or operated in intervals to consume only low power. Signals from the infrared sensor may be used to determine if hot box condition or a hot wheel condition persists.

The device **10** may comprise other detectors. The device **10** may comprise an acceleration detector to detect additional forces acting on a wheel subjected to scanning by the acceleration detector.

The temperature sensor may be positioned within the housing **12.** The temperature sensor may be positioned within the housing **12** in a position that allows heat from the target undercarriage component to be detected. The temperature sensor may be positioned within the housing **12** in a position that allows the temperature of the target undercarriage component to be measured.

The rail undercarriage **20** may comprise components such as an axle **22,** wheels **24,** wheel bearings **26** and axle stubs **28.** The device may be located so as to obtain IR data from the one of the target rail vehicle undercarriage components.

The device **10** may be located on the undercarriage component. The device **10** may be located on the target undercarriage component the temperature of which is to be measured by the temperature sensor. The device may be positioned on the axle **22,** wheels **24,** wheel bearings **26** or axle stubs **28.**

In an embodiment, the device **10** may be located on one undercarriage component adjacent to the target undercarriage component. The device **10** may be positioned on a wheel **24** and orientated to measure the temperatures of the wheel bearing **26** or the axle **22.** The device may be positioned on the axle **22** and orientated to measure the temperature of the wheel **24.** The device **10** may be positioned on an axle stub **28** and orientated to measure the temperatures of the wheel bearing **26** or the wheel **24.**

The rail vehicle may travel on the rails **32** of a rail track **30** that may be positioned on a rail bed, such as within a cross tie or a sleeper **34.**

The device **10** may be provided with electronics which includes a controller to control the temperature sensor. The controller may asses the signals from the temperature sensor. The electronics may be configured to communicate wirelessly. The electronics may be configured to operate within a wireless network. In an embodiment, the measurements of the target undercarriage component may be transmitted through wireless transmission to a receiver. In an embodiment, the receiver may be located in the rail vehicle. In an embodiment, the receiver may be a part of an on-board system and may be located in the cabin of the train that includes the rail vehicle. In an embodiment, the receiver may be a way station by the side of the tracks **30.**

The device **10** may be powered by a battery. In an embodiment, the battery may be a lithium battery which is able to provide a power supply over a period of 1 to 2 years. The temperature sensor may be powered by the battery. The electronics and associated controller may be powered by the battery.

In an embodiment, the device **10** may be powered through rotational acceleration. The rotation force on the temperature sensor may generate electrical power for the operation of the temperature sensor.

The temperature sensor may be powered through rotational acceleration. The electronics and associated controller may be powered through rotational acceleration.

The housing **12** is supported on the undercarriage component, and the housing **12** may support a generator configured to produce electrical power when the undercarriage component, such as a rail vehicle wheel or axle, turns as the rail vehicle moves. Circuitry may be supported in the housing **12** and may receive the electrical power.

Electrical power may be generated through electromagnetic induction. In an embodiment, the power supply may be an electromagnetic generator. The power source may comprise a magnetic core. In an embodiment, the magnetic core may have a plurality of stationary permanent magnets that are arranged in succession in the circumferential direction, with their poles alternating. The power supply may further comprise a winding encircling the magnetic core. The magnetic core may produce a magnetic flux which passes through the winding and also passes through an air gap. A ring having teeth may be positioned such that the teeth may pass through the air gap when the ring rotates. The air gap may be between the magnetic core and teeth provided on the ring.

When the ring rotates, the teeth move through the air gap between the alternating polarity poles, causing change in flux linkage with the winding and inducing voltage across the winding. The power supply may contain a full wave rectifier and a voltage regulator which converts the alternating current generated in the winding to direct current.

In an embodiment, the ring may be rotatably mounted in the housing **12.** The ring may be weighted such that as the undercarriage component rotates the weight would tend to remain in its lowest position in the housing **12.The** position which would be equivalent to the weight rotating within the housing **12** in the opposite direction as the rotation of the undercarriage component.

As the undercarriage component rotates, the magnetic core may rotate relative to the ring and the teeth. The relative rotation may move the teeth though the air gap so as to induce a voltage. The voltage may be used to supply power to the device **10** and the components therein.

The device **10** may be disposed on the undercarriage component which undergoes rotation as the rail vehicle travels along the track **30.** The device **10** may rotate in response to a travelling movement of the rail vehicle. The temperature sensor positioned within the device **10** may rotate in response to the travelling movement of the rail vehicle. The temperature sensor may move upon rotation movement of the wheels of the rail vehicle. The rotation of the temperature sensor may be proportional to the travel velocity of the rail vehicle. The temperature sensor may be subject to a rotational force in response to the travelling movement of the rail vehicle.

The rail vehicle may be temporarily retrofitted with the device **10** for detecting a hot box condition.

The method of temporary retrofitting a rail vehicle may comprise removably coupling the housing **12** of the device **10** to the undercarriage component of the rail vehicle. The housing **12** may be coupled magnetically and the temperature sensor may be positioned within the housing **12.**

The skilled person would appreciate that foregoing embodiments may be modified or combined to obtain the device **10** of the present disclosure.

### Industrial Applicability

This disclosure describes a device **10** which can be positioned with ease on the rail vehicle undercarriage component. The device **10** may be temporarily coupled to the rail vehicle undercarriage component. Such a temporary coupling may avoid the need for the device **10** to be manufactured as a part of the rail vehicle undercarriage component. Thus, the device **10** may be assembled without the need for retrofitting the under carriage component. The device **10** may be decoupled from the undercarriage component after use without undue effort. The device **10** may be used as a consumable item.

The device **10** may be in direct contact with the rail vehicle undercarriage component and thereby may be able to measure the temperature of the component directly.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof.

The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A device (10) for a detecting a hot box condition on a rail vehicle comprising:
a housing (12) removably coupled to an undercarriage component of the rail vehicle, the housing being coupled magnetically; and
a temperature sensor positioned within the housing (12).

2. The device (10) according to claim 1 wherein the undercarriage component is a rotating component.

3. The device (10) according to claim 2 wherein the undercarriage component is a wheel.

4. The device (10) according to claim 2 wherein the undercarriage component is an axle.

5. The device (10) according to any one of the preceding claims 2 to 4 wherein the temperature sensor is powered through rotational acceleration force.

6. The device (10) according to any one of the preceding claims wherein the temperature sensor is powered through a battery.

7. A method of temporary retrofitting of a rail vehicle for detecting a hot box condition comprising the step of:
removably coupling a housing (12) of a device (10) to an undercarriage component of the rail vehicle wherein the housing (12) is coupled magnetically and a temperature sensor is positioned within the housing (12).

8. The method of claim 7 claims wherein the temperature sensor is powered through rotational acceleration.
